# EUROPÄISCHE PATENTSCHRIFT

(11) **EP 0 618 521 B1**
(45) Veröffentlichungstag und Bekanntmachung des Hinweises auf die Patenterteilung: **03.09.1997**
(21) Anmeldenummer: 94105057.7
(22) Anmeldetag: 30.03.1994
(51) Int. Cl.: G05B 19/18, G01B 7/00

(54) **Verfahren und Vorrichtung zum Überwachen von Objekten**
Method and device for supervision of objects
Procédé et dispositif pour la surveillance d'objets

(30) Priorität: 02.04.1993 DE 4310872
(43) Veröffentlichungstag der Anmeldung: 05.10.1994
(73) Patentinhaber: LEUKHARDT SYSTEMELEKTRONIK GmbH, D-78532 Tuttlingen (DE)
(72) Erfinder: Huber, Manfred, DE-78582 Balgheim (DE); Jüngling, Klaus, DE-78532 Tuttlingen (DE); Behling, Bruce Wm., Hartland, Wi 53029 (US)
(74) Vertreter: Patentanwälte Westphal, Buchner, Mussgnug Neunert, Göhring

(56) Entgegenhaltungen:
- WO-A-88/02139
- WO-A-90/07097
- WO-A-92/21470
- DE-A- 3 003 431
- DE-A- 3 805 500

## Beschreibung

Die Erfindung betrifft ein Verfahren zum Überwachen von Objekten, wie insbesondere Werkzeugen, oder von Prozeßzonen gem. dem Oberbegriff des Anspruchs 1 sowie eine Vorrichtung zur Durchführung des Verfahrens gem. dem Oberbegriff des Anspruchs 4.

Aus der DE 30 03 431 C2 ist es bekannt, Werkzeuge an Werkzeugmaschinen, z. B. Bohrer mittels einer Tastnadel zu überwachen. Die Tastnadel wird zwischen den Arbeitsvorgängen gegen das Werkzeug geschwenkt, um dessen Präsenz und Funktionsfähigkeit zu überprüfen. Die Tastnadel sitzt auf einer durch einen Elektromotor angetriebenen Welle. Der Schwenkwinkel der Tastnadel wird durch einen Drehgeber bestimmt. In einem Lernzyklus (Teach-In-Zyklus) wird die Tastnadel gegen einen Referenzanschlag geschwenkt, z. B. gegen ein zu überwachendes Objekt, wobei die Winkelposition dieses Referenzanschlags als Soll-Winkelwert in einem Mikrocomputer gespeichert wird. Bei den folgenden Überwachungszyklen wird der durch den Drehgeber ermittelte Schwenkwinkel der Tastnadel bestimmt und der Ist-Winkelwert, bei welchem die Tastnadel gegen das zu überwachende Objekt anschlägt, mit dem gespeicherten Soll-Winkelwert verglichen. Bei Übereinstimmung wird eine Gut-Meldung, bei Abweichung eine Stör- Meldung ausgegeben. Wird die Vorrichtung zum Überwachen einer Prozeßzone (Freiraumüberwachung) verwendet, so erfolgt die Gut-Meldung, wenn die Tastnadel den Winkelbereich der Prozeßzone ungestört überstreichen kann. Eine Stör-Meldung erfolgt, wenn die Tastnadel gegen ein Hindernis in der Prozeßzone anschlägt.

Bei der bekannten Überwachung ist die Null-Position der Tastnadel durch einen mechanischen Null-Anschlag festgelegt. Der Schwenkwinkel der Tastnadel wird durch den Drehgeber von diesem Null-Anschlag gezählt. Bei Anschlag der Tastnadel gegen das zu überwachende Objekt oder am Ende der Prozeßzone wird die Drehrichtung des Elektromotors umgekehrt, z. B. indem ein verwendeter Gleichstrom-Elektromotor umgepolt wird, um die Tastnadel wieder in die Null-Position zurückzuschwenken.

Bei der bekannten Vorrichtung kann die Tastnadel von der Null-Position nur in eine Drehrichtung geschwenkt werden. Die jeweilige Polung des Elektromotors gibt die Information über die Schwenkrichtung der Tastnadel. Dadurch sind die Einsatzmöglichkeiten der Vorrichtung beschränkt. Bei der Rückstellung der Tastnadel in die Null-Position wird der mechanische Null-Anschlag angefahren. Die damit verbundene mechanische Beanspruchung beeinflußt die Lebensdauer der Vorrichtung.

Aus der WO 88/02 139 ist es bekannt, eine numerisch gesteuerte Drehmaschine bezüglich der tatsächlichen Lage der Rotationsachse des Werkstückes zu kalibrieren. Hierzu wird ein zylindrisches Werkstück gespannt und durch eine Tastnadel abgetastet. Die Tastnadel fährt das Werkstück linear an zwei diametralen Punkten an. Aus der Koordinatendifferenz dieser beiden Punkte wird die tatsächliche Rotationsachse berechnet, um einen eventuellen Achsenversatz in der numerischen Steuerung zu korrigieren.

Der Erfindung liegt die Aufgabe zugrunde, ein Verfahren und eine Vorrichtung zum Überwachen von Objekten oder Prozeßzonen zur Verfügung zu stellen, die einen vielseitigeren und flexibleren Einsatz und höhere Standzeiten ermöglichen.

Diese Aufgabe wird erfindungsgemäß gelöst durch ein Verfahren mit den Merkmalen des Anspruchs 1 und eine Vorrichtung mit den Merkmalen des Anspruchs 5.

Vorteilhafte Ausführungsformen der Erfindung sind in den jeweils rückbezogenen Unteransprüchen angegeben.

Erfindungsgemäß wird ein Drehgeber verwendet, der nicht nur inkremental den Schwenkwinkel mißt, sondern der auch die Schwenkrichtung der Tastnadel erkennt. Die Null-Position der Tastnadel wird nicht durch einen mechanischen Null-Anschlag definiert, sondern wird ausgehend von dem Soll-Winkelwert des Referenzanschlages durch den Mikrocomputer oder entsprechende Logikbausteine (ASIC o.ä.) berechnet und gespeichert. Da kein mechanischer Null-Anschlag vorhanden und notwendig ist, und da der Drehgeber nicht nur den Schwenkwinkel sondern auch die Schwenkrichtung der Tastnadel ermittelt, ist es möglich, die Tastnadel von der Null-Position in beiden Schwenkrichtungen nach rechts und nach links zu verschwenken. Dadurch können mittels einer einzigen Tastnadel zwei Objekte oder zwei Prozeßzonen rechts und links von der Null-Position der Tastnadel überwacht werden.

Da die Null-Position softwaremäßig durch den Mikrocomputer festgelegt ist, wird nicht bei jedem Abtastzyklus ein mechanischer Null-Anschlag angefahren, so daß die Lebensdauer der Vorrichtung wesentlich verbessert wird.

Die softwaremäßige Festlegung der Null-Position ermöglicht es, die Null-Position frei zu wählen. Dadurch kann die Vorrichtung sehr flexibel dem jeweiligen Anwendungsproblem angepaßt werden. Die Null-Position kann so gewählt werden, daß der Schwenkwinkel der Tastnadel von der Null-Position bis zum Anschlag an dem zu überwachenden Objekt einerseits so klein wie möglich gehalten wird und andererseits ausreichend groß gewählt werden kann, um die Tastnadel während des Arbeitsvorganges zuverlässig aus dem Arbeitsbereich herauszuschwenken. Werden durch die Vorrichtung zwei Objekte rechts und links von der Null-Position überwacht, so kann die Null-Position zwischen den beiden Soll-Winkelwerten so festgelegt werden, daß sich minimale Nebenzeiten für die Überwachung ergeben. Sind die beiden zu überwachenden Objekte gleich, beispielsweise zwei Werkzeuge einer Werkzeugmaschinen, so wird die Null-Position vorzugsweise symmetrisch in der Mitte zwischen den beiden Soll-Winkelwerten, d. h. den Positionen der beiden Werkzeuge festgelegt.

Die Vorrichtung ermöglicht nicht nur die Überwachung eines Objektes in einer vorgegebenen Winkelposition, z. B. eines Werkzeuges, oder die Überwachung einer Prozeßzone mit einem vorgegebenen Winkelbereich (Freiraumüberwachung). Die Erkennung der Schwenkrichtung der Tastnadel durch den Drehgeber ermöglicht darüber hinaus auch den Einsatz zur Winkelmessung, d. h. zur Messung des Schwenkwinkels von der Null-Position bis zu einem Objekt in variabler Winkelposition. Hierzu wird ein fest eingebauter Referenzanschlag verwendet, der in dem Lernzyklus angefahren wird und von dessen Soll-Winkelwert ausgehend die Null-Position festgelegt wird. Die Winkelmessung kann dann von dieser Null-Position aus durchgeführt werden.

Im folgenden wird die Erfindung anhand eines in der beigefügten Zeichnung dargestellten Ausführungsbeispiels näher erläutert. Es zeigen:
- Figur 1: in perspektivischer Darstellung einen teilweise aufgebrochenen Tastkopf der Vorrichtung und

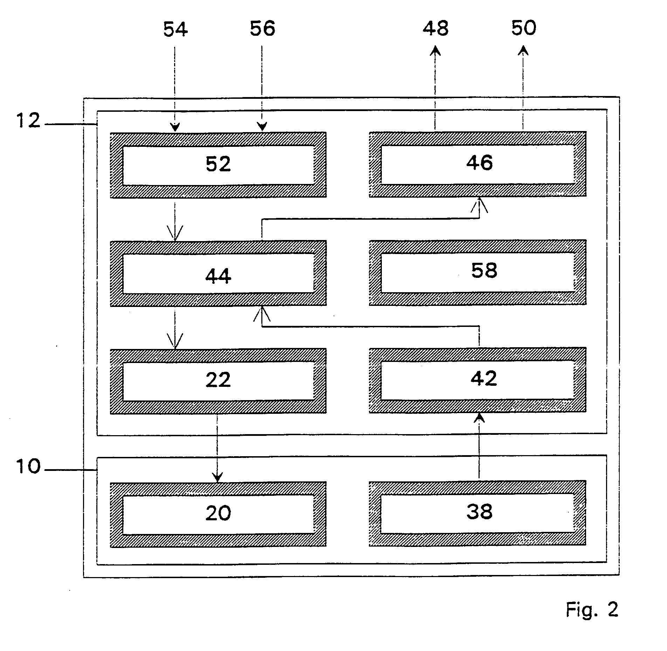

- Figur 2: ein Blockschaltbild der gesamten Vorrichtung.

Die Vorrichtung besteht aus einem Tastkopf 10 und einem Steuergerät 12. Der Tastkopf 10 wird unmittelbar an dem zu überwachenden Objekt oder der zu überwachenden Prozeßzone angeordnet, beispielsweise neben dem zu überwachenden Werkzeug, z. B. einem Bohrer, einer Werkzeugmaschine. Das Steuergerät 12 kann im Abstand angeordnet werden, um beispielsweise von Späne-, Kühlmittel- und Schmiermittelanfall geschützt zu sein. Der Tastkopf 10 und das Steuergerät 12 sind über ein Kabel 14 miteinander verbunden.

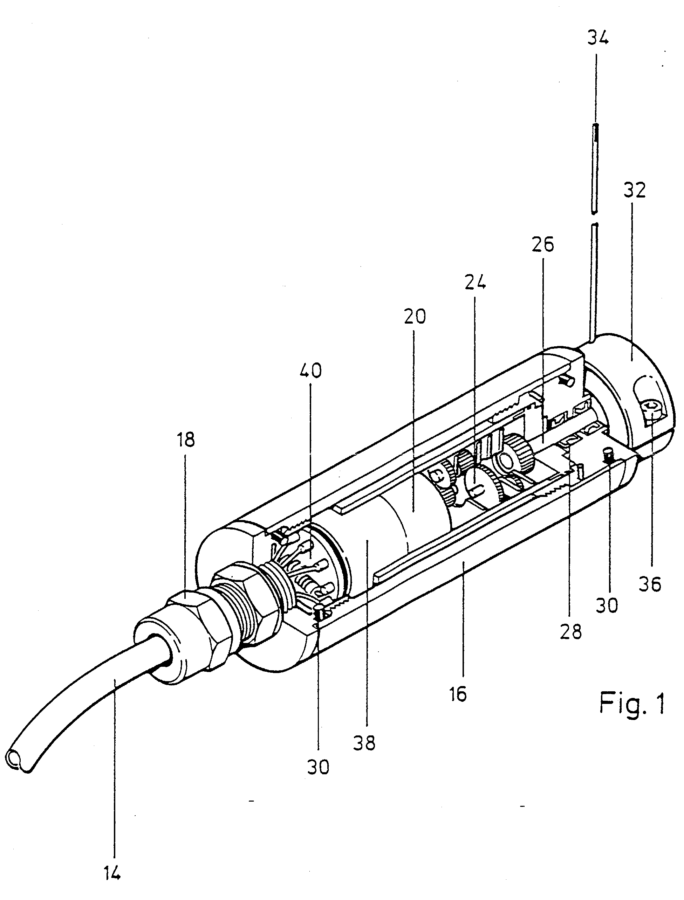

Der in Fig. 1 dargestellte Tastkopf weist ein zylindrisches Gehäuse 16 auf, welches gegen Späne, Kühl- und Schmiermittel und ähnliche Störeinflüsse abgedichtet ist. Das Kabel 14 zum Anschluß an das Steuergerät 12 ist mittels eines verschraubbaren Steckverbinders 18 an den Tastkopf 10 angeschlossen. In dem Gehäuse 16 ist ein Elektromotor 20 angeordnet, der als Gleichstrommotor ausgebildet ist. Der Elektromotor 20 wird durch einen in dem Steuergerät 12 angeordneten Motortreiber 22 über das Kabel 14 umpolbar gespeist. Der Elektromotor 20 treibt über ein Präzisionszahnradgetriebe 24 eine Welle 26, die koaxial stirnseitig aus dem Gehäuse 16 herausgeführt ist. Eine Doppellippendichtung 28 dichtet den Durchtritt der Welle 26 durch den stirnseitigen Deckel des Gehäuses 16 gegen Späne und Kühlmittel ab. O-Ringdichtungen 30 dichten die jeweiligen stirnseitigen Deckel des zylindrischen Gehäuses 16 ab. Auf dem aus dem Gehäuse 16 herausragenden Stummel der Welle 26 ist ein Nadelhalter 32 mittels einer Klemmschraube 36 festgeklemmt, in welchem eine Tastnadel 34 klemmbar ist. Die in dem Nadelhalter 32 festgeklemmte Tastnadel 34 steht radial von der Welle 26 ab.

Kabelseitig von dem Elektromotor 20 ist ein Drehgeber 38 in dem Gehäuse 16 angeordnet, der die Winkelstellung der Welle des Elektromotors 20 bestimmt. Eine Platine 40 nimmt die Elektronik für die Meßwertaufnahme und -verstärkung des Drehgebers 38 auf. Die Platine 40 ist über den Steckverbinder 18 und das Kabel 14 mit dem Steuergerät 12 verbunden. Der Drehgeber 38 ist ein an sich bekannter inkrementaler optischer oder magnetischer Drehgeber, der eine Drehrichtungserkennung aufweist, vorzugsweise auf der Basis zweier um 90° phasenverschobener Signale.

Die Impulse des Drehgebers 38 werden über das Kabel 14 dem Steuergerät 12 zugeführt, in welchem sie nach einer Impulsaufbereitung 42 einem Mikrocomputer 44 zugeführt werden. Der Mikrocomputer 44 steuert einerseits über den Motortreiber 22 den Elektromotor 20 und gibt andererseits über eine Relaisausgabe 46 Gut-Meldungen 48 bzw. Stör-Meldungen 50 aus. Dem Mikrocomputer 44 werden über ein Eingangstrennfilter 52 ein Startsignal 54 für einen Lernzyklus oder ein Startsignal 56 für den Abtastzyklus zugeführt. Weiter ist in dem Steuergerät 12 eine Spannungsversorgung 58 angeordnet.

Die Überwachung arbeitet in folgender Weise:

Der Tastkopf 10 wird zwischen zwei zu überwachenden Objekten, beispielsweise den Bohrern zweier nebeneinander angeordneter Werkzeugspindeln montiert, so daß sich die beiden zu überwachenden Objekte im Schwenkbereich der Tastnadel 34 befinden.

Es wird nun an den Eingang 54 das Startsignal für den Lernzyklus angelegt. Aufgrund dieses Startsignals 54 steuert der Mikrocomputer 44 den Elektromotor 20 zunächst in einer Drehrichtung, so daß die Tastnadel 34 beispielsweise nach rechts geschwenkt wird. Sobald die Tastnadel 34 gegen das erste Objekt anschlägt, wird die Winkelposition der Tastnadel als Soll-Winkelwert des ersten Objektes in dem Mikrocomputer 44 gespeichert. Der Mikrocomputer 44 steuert nun die Drehrichtung des Elektromotors 20 um, so daß die Tastnadel 34 in entgegengesetzter Richtung nach links geschwenkt wird. Sobald die Tastnadel 34 bei dieser Schwenkbewegung an dem zweiten Objekt anschlägt, wird ihre Winkelposition als zweiter Soll-Winkelwert in dem Mikrocomputer 44 abgespeichert. Aus den Soll-Winkelwerten der beiden Objekte und dem von dem Drehgeber 38 ermittelten Schwenkwinkel zwischen diesen beiden Soll-Winkelwerten berechnet der Mikrocomputer 44 die Null-Position der Tastnadel 34, die vorzugsweise in der Mitte zwischen den beiden Soll-Winkelwerten liegt. Die Tastnadel 34 wird nun in diese berechnete Null-Position geschwenkt, womit der Lernzyklus abgeschlossen ist.

Anschließend kann jeweils durch Anlegen eines Startsignals an den Eingang 56 ein Abtastzyklus gestartet werden. Das Startsignal 56 kommt beispielsweise von der Werkzeugmaschine nach jedem Arbeitsvorgang, um die Funktionsfähigkeit der Werkzeuge zu prüfen.

Sobald das Startsignal 56 dem Mikrocomputer 44 zugeführt wird, startet dieser den Elektromotor 20 in der ersten Drehrichtung, so daß sich die Tastnadel 34 beispielsweise nach rechts bewegt. Dabei wird der Schwenkwinkel durch den Drehgeber 38 gemessen. Beim Anschlag der Tastnadel 34 gegen das zu überwachende erste Objekt vergleicht der Mikrocomputer 44 den Ist-Winkelwert mit dem für dieses erste Objekt gespeicherten Soll-Winkelwert. Die Drehrichtung des Elektromotors 20 wird umgepolt, so daß sich die Tastnadel 34 nun in entgegengesetzter Richtung nach links bewegt. Beim Anschlag der Tastnadel 34 gegen das zweite Objekt wird der Ist-Winkelwert erneut durch den Mikrocomputer 44 mit dem für dieses zweite Objekt gespeicherten Soll-Winkelwert verglichen. Stimmt der Ist-Winkelwert mit dem gespeicherten Soll-Winkel-wert für beide Objekte überein, so wird durch den Mikrocomputer 44 über die Relaisausgabe 46 die Gut-Meldung 48 geschaltet. Ergibt sich bei einem oder beiden Objekten eine Abweichung von Ist-Winkelwert und Soll-Winkelwert, so schaltet der Mikrocomputer 44 über die Relaisausgabe 46 die Stör-Meldung 50. Die Gut-Meldung 48 kann beispielsweise dazu verwendet werden, den nächsten Arbeitsvorgang der Werkzeugmaschine zu starten, während die Stör-Meldung 50 den beitsvorgang der Werkzeugmaschinen unterbricht.

Es ist ohne weiteres ersichtlich, daß die beschriebenen Lern- und Abtastzyklen nicht notwendig zwei zu überwachende Objekte voraussetzen. Anstelle eines oder beider zu überwachender Objekte kann auch eine Prozeßzone darauf überwacht werden, daß sich kein störendes Hindernis im Bereich dieser Prozeßzone befindet. In diesem Falle wird anstelle des zu überwachenden Objekts ein Endanschlag am Ende des Winkelbereichs der zu überwachenden Prozeßzone als Referenzanschlag für den Soll-Winkelwert des Lernzyklus und als Anschlag für den Ist-Winkelwert beim Abtastzyklus verwendet.

Weiter ist ohne weiteres ersichtlich, daß nicht notwendig zwei Objekte überwacht werden müssen. Soll nur ein Objekt oder eine Prozeßzone überwacht werden, so kann der zweite Referenzanschlag ein fest in dem Tastkopf angeordneter mechanischer Anschlag sein. Dieser mechanische Anschlag wird jedoch nur einmal im Lernzyklus als Referenzanschlag angefahren, um die Null-Position festzulegen. Bei den Abtastzyklen erfolgt die Schwenkbewegung der Tastnadel 34 von dieser Null-Position aus, die keinen mechanischen Anschlag aufweist.

Soll die Vorrichtung zur Winkelmessung eingesetzt werden, so kann ebenfalls in einem Lernzyklus die Null-Position für die Tastnadel 34 aus dem Soll-Winkelwert eines fest in den Tastkopf 10 eingebauten Referenzanschlags berechnet werden. Der Mikrocomputer 44 mißt dann inkremental den Schwenkwinkel der Tastnadel 34 von der so berechneten Null-Position aus in der entgegengesetzten Schwenkrichtung.

Die Winkelmessung ermöglicht nicht nur eine sich wiederholende Überwachung desselben Winkels, wie dies bei der Werkzeug-Überwachung erforderlich ist, sondern auch die Messung unterschiedlicher Winkel bei aufeinanderfolgenden Messungen. Ebenso sind Differenz-Winkelmessungen möglich.

## Patentansprüche

1. Verfahren zum Überwachen von Objekten, insbesondere Werkzeugen, oder von Prozeßzonen, bei welchem eine Tastnadel (34) durch einen in beiden Drehrichtungen antreibbaren Elektromotor (20) verschwenkt wird, ein Drehgeber (38) den auf eine Null-Position bezogenen Schwenkwinkel der Tastnadel (34) bestimmt und ein Mikrocomputer (44) oder ein entsprechender Logikbaustein den Schwenkwinkel mit einem in einem Lernzyklus durch einen Referenzanschlag ermittelten und gespeicherten Soll-Winkelwert vergleicht und eine sich aus dem Vergleich ergebende Meldung abgibt, dadurch gekennzeichnet, daß der Drehgeber (38) die Schwenkrichtung der Tastnadel (34) erkennt und daß die Null-Position der Tastnadel (34) durch den Mikrocomputer (44) oder den entsprechenden Logikbaustein von dem Soll-Winkelwert ausgehend rechnerisch definiert und in dem Mikrocomputer (44) oder dem entsprechenden Logikbaustein gespeichert wird.

2. Verfahren nach Anspruch 1, dadurch gekennzeichnet, daß in dem Lernzyklus die Tastnadel (34) zunächst in einer Schwenkrichtung zu einem ersten Referenzanschlag und dann in der entgegengesetzten Schwenkrichtung zu einem zweiten Referenzanschlag bewegt wird und daß die Null-Position zwischen den Soll-Winkelwerten der beiden Referenzanschläge festgelegt wird.

3. Verfahren nach Anspruch 2, dadurch gekennzeichnet, daß die Null-Position in der Mitte zwischen den Soll-Winkelwerten der beiden Referenzanschläge festgelegt wird.

4. Vorrichtung zum Überwachen von Objekten, insbesondere Werkzeugen, oder von Prozeßzonen, mit einer Tastnadel (34), mit einem die Tastnadel (34) verschwenkenden, in beiden Drehrichtungen antreibbaren Elektromotor (20), mit einem den Schwenkwinkel der Tastnadel (34) messenden inkrementalen Drehgeber (38) und mit einem Mikrocomputer (44) oder einem entsprechenden Logikbaustein, der den Schwenkwinkel der Tastnadel (34) von einer Null-Position ausgehend zählt, mit einem in einem Lernzyklus durch einen Referenzanschlag ermittelten und gespeicherten Soll-Winkelwert vergleicht und eine sich aus dem Vergleich ergebende Meldung (48, 50) abgibt, dadurch gekennzeichnet, daß der Drehgeber (38) ein drehrichtungserkennender Drehgeber ist, daß die Tastnadel (34) von der Null-Position aus in beiden Schwenkrichtungen verschwenkbar ist und daß die Null-Position durch den Mikrocomputer (44) von dem durch den Referenzanschlag vorgegebenen Soll-Winkelwert ausgehend festlegbar und speicherbar ist.

5. Vorrichtung nach Anspruch 4, dadurch gekennzeichnet, daß in beiden Schwenkrichtungen der Tastnadel (34) jeweils ein Referenzanschlag vorgesehen ist und daß in dem Mikrocomputer (44) die Soll-Winkelwerte beider Referenzanschläge abspeicherbar sind.

6. Vorrichtung nach Anspruch 4 oder 5, dadurch gekennzeichnet, daß der Elektromotor (20) ein durch den Mikrocomputer (44) gesteuerter Gleichstrommotor ist.

## Claims

1. Method of monitoring objects, in particular tools, or processing zones, in which a stylus (34) is swivelled by an electric motor (20) drivable in both directions of rotation, a rotation sensor (38) determines the swivel angle of the stylus (34) relative to the zero position and a microcomputer (44) or a similar logic assembly compares the swivel angle with a required angular value, determined by a reference stop in a learning cycle and stored, and delivers a signal resulting from the comparison, characterized in that the rotation sensor (38) detects the swivelling direction of the stylus (34) and in that the zero position of the stylus (34) is defined by the microcomputer (44) or the similar logic assembly by calculation proceeding from the required angular value and is stored in the microcomputer (44) or the similar logic assembly.

2. Method according to Claim 1, characterized in that, in the learning cycle, the stylus (34) is first moved in one swivelling direction towards a first reference stop and then in the opposite swivelling direction to a second reference stop and in that the zero position is set between the required angular values of the two reference stops.

3. Method according to Claim 2, characterized in -that the zero position is set in the centre between the required angular values of the two reference stops.

4. Device for monitoring objects, in particular tools, or processing zones, comprising a stylus (34), comprising an electric motor (20) which swivels the stylus (34) and is drivable in both directions of rotation, comprising an incremental rotation sensor (38) which measures the swivelling angle of the stylus (34) and comprising a microcomputer (44) or a similar logic assembly which counts the swivelling angle of the stylus (34) proceeding from a zero position, compares it with a required angular value, determined by a reference stop in a learning cycle and stored, and delivers a signal (48, 50) resulting from the comparison, characterized in that the rotation sensor (38) is a rotation sensor which detects direction of rotation, in that the stylus (34) can be swivelled in both swivelling directions starting from the zero position and in that the zero position can be set and stored by the microcomputer (44) starting from the required angular value set by the reference stop.

5. Device according to Claim 4, characterized in that a reference stop is provided in each case in both swivelling directions of the stylus (34) and in that the required angular values of the two reference stops are storable in the microcomputer (44).

6. Device according to Claim 4 or 5, characterized in that the electric motor (20) is a direct-current motor controlled by the microcomputer (44).

## Revendications

1. Procédé de surveillance d'objets, en particulier d'outils, ou de zones opératoires, selon lequel :
- une aiguille de touche (34) pivote sous l'action d'un moteur électrique (20) pouvant tourner dans les deux sens,
- un indicateur de rotation (38) détermine l'angle de pivotement de l'aiguille (34) par rapport à une position zéro,
- un micro-ordinateur (44) ou un module logique approprié compare l'angle de pivotement à une valeur angulaire théorique établie au cours d'un cycle d'apprentissage à partir d'une butée de référence et mise en mémoire, le micro-ordinateur délivrant alors une information correspondant au résultat de la comparaison,
caractérisé en ce que
l'indicateur de rotation (38) reconnaît le sens de pivotement de l'aiguille de touche (34), la position zéro de l'aiguille étant définie par le calcul qu'effectue le micro-ordinateur (44) ou le module logique correspondant à partir de la valeur angulaire théorique, cette position zéro étant alors mise en mémoire dans le micro-ordinateur ou le module correspondant.

2. Procédé selon la revendication 1,
caractérisé en ce que
dans le cycle d'apprentissage, l'aiguille de touche (34) pivote d'abord dans un sens jusqu'à une première butée de référence, puis dans le sens inverse jusqu'à une seconde butée de référence, la position zéro étant fixée entre les valeurs angulaires théoriques des deux butées de référence.

3. Procédé selon la revendication 2,
caractérisé en ce que
la position zéro est fixée au milieu de l'intervalle séparant les valeurs angulaires théoriques des deux butées de référence.

4. Dispositif de surveillance d'objets, en particulier d'outils, ou de zones opératoires, comprenant une aiguille de touche (34), un moteur électrique (20) faisant pivoter l'aiguille et pouvant tourner dans les deux sens, un indicateur de rotation (38) mesurant par incréments l'angle de pivotement de l'aiguille (34), un micro-ordinateur (44), ou un module logique correspondant qui compte l'angle de pivotement à partir de la position zéro, le compare à une valeur angulaire théorique établie et mise en mémoire au cours d'un cycle d'apprentissage au moyen d'une butée de référence, puis émet l'information (48, 50) résultant de la comparaison,
caractérisé en ce que
l'indicateur de rotation (38) est un indicateur qui reconnaît le sens de rotation, l'aiguille pouvant pivoter dans les deux sens à partir de la position zéro qui a été établie et mise en mémoire par le micro-ordinateur (44) à partir de la valeur angulaire théorique donnée par la butée de référence.

5. Dispositif selon la revendication 4,
caractérisé en ce qu'
il est prévu, pour chaque sens de pivotement de l'aiguille de touche (34) une butée de référence, les valeurs angulaires théoriques de ces deux butées étant mémorisables dans le micro-ordinateur (44).

6. Dispositif selon la revendication 4 ou 5,
caractérisé en ce que
le moteur électrique (20) est un moteur à courant continu piloté par le micro-ordinateur (44).
